# EUROPEAN PATENT SPECIFICATION

(11) **EP 0 945 483 B1**
(45) Date of publication and mention of the grant of the patent: **24.08.2005**
(21) Application number: 99302249.0
(22) Date of filing: 23.03.1999
(51) Int. Cl.: C08K 3/26, C08K 5/098, C08K 13/02

(54) **Thermal stabilizer and thermally stabilized halogen-containing resin composition**
Thermischer Stabilisator und damit thermostabilisierte Halogenharzzusammensetzung
Stabilisateur thermique et composition thermostabilisée de résine halogénique

(30) Priority: 26.03.1998 JP 7940498; 03.03.1999 JP 5525799
(43) Date of publication of application: 29.09.1999
(73) Proprietor: Ajinomoto Co., Inc., Tokyo 104-0031 (JP)
(72) Inventor: Miyachi, Yasuyoshi, Kawasaki-ku, Kawasaki-shi, Kanagawa-ken (JP); Atarashi, Yasunori, Yokkaichi-shi, Mie-ken (JP); Tanaka, Takeo, Kawasaki-ku, Kawasaki-shi, Kanagawa-ken (JP); Yasuda, Naoki, Kawasaki-ku, Kawasaki-shi, Kanagawa-ken (JP)
(74) Representative: Nicholls, Kathryn Margaret

(56) References cited:
- EP-A- 0 422 335
- GB-A- 2 078 759

## Description

The present invention relates to a thermal stabilizer for halogen-containing resins, a halogen-containing resin composition blended with the thermal stabilizer, and a halogen-containing resin-molded article produced by molding the resin composition.

Halogen-containing resins such as vinyl chloride resin are highly flame retardant and have excellent properties including light resistance, recycling potency, and chemical resistance. Therefore, the resins are widely used in building materials, pipes, cable coating materials, various sheets, various films and containers.

During molding under heating deterioration of the quality of these halogen-containing resins occurs, for example thermal resin coloring and deterioration of physical properties such as strength occurs due to thermal decomposition accompanied by dehydrohalogenation. So as to overcome such problems, generally, stabilizers for improving the thermal stability of halogen-containing resins are added to these resins.

As the stabilizers for improving the thermal stability of halogen-containing resins (referred to as "thermal stabilizers" hereinbelow), conventionally, use has been made of metal salts of organic acids such as fatty acids, aromatic carboxylic acids, and amino acids. More specifically, the lead salt and cadmium salt thereof have satisfactory functions as thermal stabilizers, and a vast amount of the lead-series stabilizers have been used. Because of the seriousness of the toxic problems, however, their use is limited. Attention is now focussed on organic acid salts of zinc having a high safety as alternative thermal stabilizers of the lead-series stabilizers.

However, the thermal stabilization effect of zinc-series thermal stabilizers is not satisfactory compared with lead-series stabilizers. Therefore, it has been expected that thermal stabilizing system at a level equal to the level of lead-series stabilizers might be achieved by blending a zinc-series stabilizer with a good safety profile.

It is an object of the invention to provide a halogen-containing resin composition with a satisfactory safety profile and thermal stability.

The inventors have found that dolomite-series compounds when used in combination with stabilizers which are organic acid salts of zinc can exert a prominent thermal stabilization effect over halogen-containing resins.

In its various aspects the present invention provides:
(1) a thermal stabilizer for halogen-containing resins, the thermal stabilizer containing a surface-treated dolomite-series compound and the zinc salt of an organic acid; characterised in that: the dolomite-series compound is surface treated with at least one compound selected from inorganic zinc compounds, zinc salts of organic acids, and stearic acid.
(2) a halogen-containing resin composition blended with a thermal stabilizer according to the first aspect; and
(3) a thermally stabilized halogen-containing resin-molded article produced by molding such resin composition.

In accordance with the invention, any dolomite-series compound is used, including, but not limited to, dolomite from natural diverse origins and for use in wall materials and as refractory materials in iron industries. Because dolomite is a complex salt of calcium carbonate and magnesium carbonate, additionally, a chemically synthesized complex salt of calcium carbonate and magnesium carbonate, namely synthetic dolomite, may also be used. A synthetic dolomite with any composition at a certain ratio of calcium and magnesium may be satisfactorily used in accordance with the invention. The weight ratio of calcium and magnesium in the synthetic dolomite for use in accordance with the invention is preferably within a range of 5 : 95 to 95 : 5 on the bases of MgO and CaO. If a synthetic dolomite with a composition outside the range is used, it may not exert a satisfactory thermal stabilization effect.

Derivatives of these natural and/or synthetic dolomites, as produced by modifying the dolomites by burning or slaking with no great modification of the composition of the metal elements, may also be used. More specifically, the derivatives include dolomite cement produced by heating the dolomites at 700 to 800 °C, a lightly burned dolomite produced by heating the dolomites at 900 to 1000 °C, a deadly burned dolomite produced by hard burning the dolomites at a high temperature of 1600 to 1800 °C, and dolomite slaked lime produced by adding water to a lightly burned dolomite for digestion, and synthetic magdoloclinker. Additionally, use may be made of derivatives produced by modifying natural minerals and synthetic complex salts, within the same range of the calcium/magnesium ratio as the range in the synthetic dolomite, in the same manner as described above, such as Acherumanite (Ca₂MgSi₂O₇), transparent pyroxene (CaMg(SiO₃)₂) and various slags. Furthermore, appropriate mixtures thereof may be satisfactory as well.

In the present specification, these dolomites and derivatives are generically called dolomite-series compounds. These dolomite-series compounds are industrially produced in large scale in various fields and are used in very diverse industries including the iron industry, porcelain industry, building materials industry and in agriculture. Because of the stable quality, accordingly, these are readily available economically. Of all the dolomite series compounds, the lightly burned dolomite is especially preferred for producing halogen-containing resin compositions with thermal stability.

The dolomite-series compound is surface treated with a specific compound. The compound for use in the surface treatment (treating agent) is selected from inorganic zinc compounds, zinc salts of organic acids, and stearic acid. These compounds may be used singly or as an appropriate mixture.

The inorganic zinc compound includes for example zinc oxide, zinc carbonate, zinc sulfate, zinc phosphite, zinc sulfite, zinc phosphate and zinc hydroxide. Additionally, an appropriate mixture thereof or a complex salt thereof may be satisfactory.

The organic acid includes for example saturated aliphatic monocarboxylic acid such as acetic acid, propionic acid, butyric acid, valeric acid, caproic acid, octanoic acid, lauric acid, stearic acid, behenic acid; saturated aliphatic dicarboxylic acid such as oxalic acid, malonic acid, succinic acid, adipic acid, terephthalic acid; unsaturated aliphatic carboxylic acid such as acrylic acid, oleic acid, crotonic acid, fumaric acid; carbocyclic carboxylic acid such as benzoic acid, camphoric acid, phthalic acid, toluic acid, hydratropic acid, cinnamic acid; heterocyclic carboxylic acid such as furoic acid, thenoic acid, pyrrolidone carboxylic acid, nicotinic acid; hydroxycarboxylic acid or alkoxycarboxylic acid such as lactic acid, malic acid, benzilic acid, salicylic acid, anisic acid, vanillic acid, protocatechuic acid, gallic acid; amino acid or amino acid derivative such as glutamic acid,lysine, aspartic acid, glycine, N-stearoyl glycine, N-acetyl glutamic acid, N-lauroyl leucine, γ-methyl glutamate.

In addition to the zinc salt of an organic acid, organic acid metal salts of any of the following metals may be present in admixture with the zinc salt: calcium, magnesium, potassium, sodium, lithium, iron, aluminium; nickel, copper, and manganese. Furthermore, a complex salt thereof may also be satisfactory. Surface treatment with organic acid zinc salts is particularly preferred for achieving a thermal stabilization effect.

If necessary, an appropriate surface treating agent for industrial use may be used in combination with the treating agents described above, unless this impairs the effect of the invention. More specifically, examples of additional surface treating agents include coupling agents of the silane series, aluminium series, and phosphate series; cationic, anionic and nonionic surfactants, and polymer dispersants. So as to obtain adequate improvement in thermal stabilization by the use of a treating agent, the quantity of these additional surface treating agents is preferably at most equal to or less than the quantity of the compound for use in surface treating dolomite-series compounds in accordance with the invention.

The amount of a surface treating agent for use in accordance with the invention varies, depending on the type and specific surface area of a dolomite-series compound and the water bound on the surface thereof, but generally, the amount is at 0.05 to 40 % by weight, preferably 0.1 to 20% by weight to the dolomite-series compound for use. At an amount less than 0.05 % by weight, the effect of surface treatment may not be sufficient; when the surface treating agent is added at an amount more than 40 % by weight, further improvement may not necessarily be obtained.

The method for surface treatment includes the following processes:
1. a process of adding a surface treating agent as such to a powder and pulverizing these powders together by using pulverizers such as Henschel mixer, colloid mill, ball mill and atomizer;
2. a process of adding a surface treating agent and a dolomite-series compound to an appropriate solvent such as toluene, xylene, methyl ethyl ketone, acetonitrile, chloroform, diethyl ether, water, ethanol and methanol and agitating and mixing them together, and subsequently removing the solvent;
and the like.

Compared with dolomite-series compounds with no surface treatment, the dolomite-series compound surface treated for use in accordance with certain embodiments of the invention may have an even more pronounced effect on thermal stabilization and may significantly improve performance in hydrochloride adsorption as assessed by a Congo-Red test. More specifically, the surface treated dolomite-series compounds in accordance with the invention are very useful compounds for thermal stabilization of halogen-containing resins.

In accordance with the invention, the dolomite-series compound is used generally at 0.01 part by weight, preferably at 0.05 part by weight or more, to 100 parts by weight of a halogen-containing resin. Below 0.01 part by weight, the objective thermal stabilization effect may not be sufficiently exerted. When the dolomite-series compound is used above 30 parts by weight, alternatively, further improvements in the thermal stabilization effect may not, necessarily, be obtained. The dolomite-series compound may desirably be added up to about 200 parts by weight, but the compound is used preferably at 150 parts by weight or less. Above 200 parts by weight, the dolomite-series compound may deteriorate by chance the physical properties of a halogen-containing resin composition, in the same way as general fillers.

The average particle size of the dolomite-series compound for use in accordance with the invention is preferably 100 microns or less, more preferably 10 microns or less. Above 100 microns, the surface of a molded resin composition turns rough, unpreferably, leading to the deterioration of the quality thereof, such as the deterioration of the physical properties.

The zinc salt of an organic acid, for use in combination with a dolomite-series compound in the thermal stabilizer for halogen-containing resins in accordance with the invention, will now be described. The organic acid includes for example acetic acid, propionic acid, butyric acid, valeric acid, caproic acid, octanoic acid, lauric acid, stearic acid, behenic acid, benzoic acid, salicylic acid, oleic acid, malic acid, succinic acid, adipic acid, terephthalic acid, trimellitic acid, glutamic acid, lysine, pyrrolidone carboxylic acid, aspartic acid and glycine.

The zinc salt of the organic acid is used at an amount for general use as a thermal stabilizer for halogen-containing resins, for example 0.01 to 20 parts by weight to 100 parts by weight of a halogen-containing resin.

The thermal stabilizer for halogen-containing resins in accordance with the invention may be blended with a polyhydric alcohol compound and/or a β-diketone compound in order to further suppress thermal coloration of resin, in addition to a dolomite-series compound (or a surface treated dolomite-series compound) and the zinc salt of such organic acid.

As the polyhydric alcohol compound for use in accordance with certain embodiments of the invention, the following are examples of suitable compounds: pentaerythritol, dipentaerythritol, tripentaerythritol, polypentaerythritol, sorbitol, glycerin, and polyglycerin. Additionally, examples of the polyhydric alcohol include the compounds after chemical modification by partially esterifying or etherifying some of the hydroxyl groups in these compounds.

Of the polyhydric alcohols, pentaerythritol and dipentaerythritol and esterified products thereof with organic acids are particularly preferred.

Preferably, by the use of compounds such as pentaerythritol and/or dipentaerythritol, partially esterified with a higher fatty acid with 10 to 22 carbon atoms and a dibasic acid with 4 to 10 carbon atoms, additional advantages may be obtained such as reduced or absent mold staining as result of reduced or absent sublimation thereof during molding under heating since they have high molecular weight. These polyhydric alcohol compounds may be used singly or in combination of two or more.

The polyhydric alcohol compound is used generally at 0.01 to 10 parts by weight, preferably 0.05 to 5 parts by weight, to 100 parts by weight of a halogen-containing resin. Below 0.01 part by weight, the synergistic effect of the polyhydric alcohol compound over thermal stabilization cannot sufficiently be exerted; above 10 parts by weight, on contrast, the physical properties of a halogen-containing resin blend may potentially be deteriorated.

As the β-diketone compound for use in accordance with the invention, appropriate compounds industrially produced and disclosed in for example JP-B-52-47949 may be usable. More specifically, the β-diketone compound includes benzoylacetylmethane, tribenzoylmethane, diacetylbenzoylmethane, stearoylbenzoylmethane, palmitoylbenzoylmethane, benzoylacetylethylmethane, diacetylmethane, triacetylmethane, dibenzoylmethane, distearoylmethane, stearoylacetylmethane, lauroylacetylmethane, and benzoylformylmethane.

Furthermore, the metal salts of these β-diketones, for example lithium-, sodium-, magnesium-, aluminium-, potassium-, calcium-, and zinc salts thereof, may satisfactorily be used.

The β-diketone compound is used generally at an amount of 0.01 to 10 parts by weight, preferably 0.05 to 5 parts by weight to 100 parts by weight of a halogen-containing resin. Below 0.01 part by weight, the synergistic effect of β-diketone over thermal stabilization sometimes may not be exerted sufficiently. Above 10 parts by weight, alternatively, the physical properties of the halogen-containing resin might be damaged. These β-diketone compounds may be used singly or in combination of two or more.

If necessary, various additives may satisfactorily be blended, within a range unless they impair the effect of the invention, to the thermal stabilizer or the halogen-containing resin composition of the invention. For example, plasticizers, fillers, antioxidants, ultraviolet absorbents, flame retardants, lubricants, pigments, antistatic agents, and anti-fogging agents, all for general use in halogen-containing resin compositions, may be blended therewith. Additionally, organic phosphorus compounds and epoxy compounds may also be blended therewith.

Halogen-containing resins, for example polyvinyl chloride, polyvinyl bromide, polyvinyl fluoride, polyvinylidene chloride, chlorinated polyethylene, a vinyl chloride - vinyl acetate copolymer and a vinyl chloride - butadiene copolymer, may be stabilised by use of the stabilisers described above. Alloys thereof may also be satisfactory. Additionally, alloys of these halogen-containing resins with non-halogen-containing resins such as polyethylene, polypropylene, polystyrene, polyphenylene ether, polyamide and polycarbonate, may also be satisfactory. Furthermore, olefin resins produced by using Ziegler-type catalysts contain the residues of the halogen-containing catalysts. The olefin resins containing the residues of the halogen-containing catalysts may also be encompassed within the halogen-containing resin in accordance with the invention.

The thermally stabilized halogen-containing resin composition of the invention is kneaded together and is then molded, by any blending process, any kneading process and any molding process, in any order, with no specific limitation.

### Examples

So as to more apparently show the characteristics of the invention, embodiments of the invention will now be described in examples.

### Production Example 1

19 kg of non-pulverized dolomite (manufactured by Tagen Lime Industry Co., LTD.) was pulverized together with 1 kg of zinc stearate under deaerated dry conditions for 24 hours. The median diameter of the resulting surface treated dolomite of zinc stearate was 1.5 µm.

### Production Example 2

19 kg of non-pulverized dolomite (manufactured by Tagen Lime Industry Co., LTD.) was pulverized together with 1 kg of calcium stearate under deaerated dry conditions for 24 hours. The median diameter of the resulting surface treated dolomite of calcium stearate was 1.1 µm.

### Production Example 3

58.3 parts of magnesium hydroxide and 74.1 parts of calcium hydroxide were suspended and dissolved in 2,000 parts of water, followed by purging of a carbonate gas under agitation at 10 °C for 3 hours. The precipitate was filtered off and dried at 50 °C or less in a carbonate gas atmosphere, to recover 152.3 parts of a complex salt of calcium carbonate and magnesium carbonate (synthetic dolomite). The ratio of calcium and magnesium in the resulting complex salt was 54 : 46 on a CaO : MgO basis. 1.9 kg of the synthetic dolomite was pulverized, together with 0.1 kg of zinc stearate, under deaerated dry conditions for 24 hours. The median diameter of the resulting surface treated synthetic dolomite of zinc stearate was 1.1 µm.

### Production Example 4

19 kg of a coarsely pulverized material of a lightly burned dolomite (manufactured by Tagen Lime Industry Co., LTD.) was pulverized, together with 1 kg of zinc stearate, under deaerated dry conditions for 24 hours. The median diameter of the resulting surface treated compound of zinc stearate was 1.2 µm.

### Production Example 5

19.8 kg of a coarsely pulverized material of a lightly burned dolomite (manufactured by Tagen Lime Industry Co., LTD.) was pulverized, together with 0.2 kg of zinc oxide, under deaerated dry conditions for 24 hours. The median diameter of the resulting surface treated compound of zinc oxide, lightly burned, was 1.2 µm.

### Production Example 6

19 kg of a coarsely pulverized material of dolomite slaked lime (manufactured by Tagen Lime Industry Co., LTD.) was pulverized, together with 0.2 kg of zinc lysine salt, 0.5 kg of stearic acid, and 0.3 kg of calcium stearate, under deaerated dry conditions for 24 hours. The median diameter of the resulting surface treated compound was 1.3 µm.

### Examples 1 to 15

Halogen-containing resin compositions of blends shown in Table 1 were individually kneaded together at 155 °C for 5 minutes by using a heat roll and were then individually prepared as a sheet of a 3-mm thickness by pressing the resulting kneaded mixtures at 155 °C for 5 minutes by using a heat press. By using each of the resulting sheets, the following tests were conducted: thermal coloring test in a gear oven at 180 °C (static thermal stability test), dynamic thermal stability test by means of a lavo plastomill at 200 °C, and a Congo-Red test at 180 °C. At the thermal coloring test, the time required for the sheet to turn dark brownish or partial black was counted; and at the dynamic thermal stability test, the time required for the resins to degrade until the kneaded torque started to increase, was counted. The results of these tests are shown in Table 1. The signs in Table 1 describe those shown below.
* 1: "1000Z" (at a polymerization degree of 1050) manufactured by Shin Dai-ichi Vinyl Corporation.
* 2: all manufactured by Tagen Lime Industry Co., LTD.
* 3: "Plenlizer ST-210" (under trade name; manufactured by Ajinomoto Fine-Thchno, Co. Inc.; a compound containing as the principal ingredient an adipate ester of dipentaerithrytol with an OH value of 900).
* 4: "Plenlizer ST-220" (under trade name; manufactured by Ajinomoto Fine-Thchno, Co. Inc.; a compound containing as the principal ingredient an adipate ester derivative of pentaerithrytol with an OH value of 900).

### Production Example 7

58.3 parts of magnesium hydroxide and 74.1 parts of calcium hydroxide were suspended and dissolved in 2,000 parts of water, followed by purging of a carbonate gas under agitation at 10 °C for 3 hours. The precipitate was filtered off and dried at 50 °C or less in a carbonate gas atmosphere, to recover 152.3 parts of a complex salt of calcium carbonate and magnesium carbonate (synthetic dolomite). The ratio of calcium and magnesium in the resulting complex salt was 54 : 46 on a CaO : MgO basis. 1.9 kg of the synthetic dolomite was pulverized, together with 0.1 kg of pentaerythritol, under deaerated dry conditions for 24 hours. The median diameter of the resulting surface treated synthetic dolomite of zinc stearate was 1.1 µm.

### Production Example 8

19.8 kg of a coarsely pulverized material of dolomite slaked lime (manufactured by Tagen Lime Industry Co., LTD.) was pulverized, together with 0.15 kg of Plenlizer ST-220 (manufactured by Ajinomoto Fine-Techno, Co. Inc.) and 0.05 kg of zinc stearate, under deaerated dry conditions for 24 hours. The median diameter of the resulting surface treated compound was 1.3 µm.

### Examples 16 and 17

Halogen-containing resin compositions of blends shown in Table 2 were tested in the same way as previous examples. The results of these tests are shown in Table 2. The signs in Table 2 are the same as Table 1.

As has been described above, in accordance with embodiments of the invention, the thermal stability of halogen-containing resins such as vinyl chloride resin can be improved by using a thermal stabilizer with a satisfactory safety profile.

**Table 1 (No.1)**

| | | | Example | | | |
|---|---|---|---|---|---|---|
| | | | 1 | 2 | 3 | 4 |
| Formulation Unit: parts by weight | polyvinyl chloride*¹ (a) | | 100 | 100 | 100 | 100 |
| | dioctyl phthalate (b) | | 50 | 50 | 50 | 50 |
| | calcium carbonate (c) | | 30 | 30 | 30 | 30 |
| | zinc stearate (d) | | 1.10 | 2.04 | 1.10 | 1.10 |
| | calcium stearate (e) | | 0.40 | 0.40 | 0.40 | 0.40 |
| | surface treated dolomite compound | | | | | |
| | | composition in Production Example 1 (f) | 3.16 | 3.16 | | |
| | composition in Production Example 2 (g) | | | | 3.16 | |
| | composition in Production Example 3 (h) | | | | | 3.16 |
| | composition in Production Example 4 (i) | | | | | |
| | composition in Production Example 5 (j) | | | | | |
| | composition in Production Example 6 (k) | | | | | |
| | non-treated dolomite compound | | | | | |
| | | burned dolomite compound*² (l) | | | | |
| | polyhydric alcohol | | | | | |
| | | pentaerythritol (m) | | | | |
| | | ST-210*³ (n) | | | | |
| | | ST-220*⁴ (o) | | | | |
| | | composition in Production Example 4 (p) | | | | |
| | β-diketone compound | | | | | |
| | | dibenzoylmethane (q) | | | | |
| | | stearoylbenzoylmethane (r) | | | | |
| Heat coloration test (unit:min.) | | | 130 | 130 | 120 | 120 |
| Heat stability dynamic test (unit:min.) | | | 58 | 60 | 56 | 62 |
| Congo red test (unit:min.) | | | 185 | 198 | 169 | 173 |

| | | | | | | |
|---|---|---|---|---|---|---|
| * = comparative example | | | | | | |

**Table 1 (No. 2)**

| | Example | | | | | | | | | | |
|---|---|---|---|---|---|---|---|---|---|---|---|
| | 5 | 6 | 7 | 8 | 9 | 10 | 11 | 12 | 13 | 14 | 15 |
| (a) | 100 | 100 | 100 | 100 | 100 | 100 | 100 | 100 | 100 | 100 | 100 |
| (b) | 50 | 50 | 50 | 50 | 50 | 50 | 50 | 50 | 50 | 50 | 50 |
| (c) | 30 | 30 | 30 | 30 | 30 | 30 | 30 | 30 | 30 | 30 | 30 |
| (d) | 1.10 | 2.04 | 1.10 | 1.10 | 1.10 | 1.10 | 1.10 | 1.10 | 1.10 | 1.10 | 1.10 |
| (e) | 0.40 | 0.40 | 0.40 | 0.40 | 0.40 | 0.40 | 0.40 | 0.40 | 0.40 | 0.40 | 0.40 |
| (f) | | | | | | | | | | | |
| (g) | | | | | | | | | | | |
| (h) | | | | | | | | | | | |
| (i) | 3.16 | 3.16 | | | 3.16 | 3.16 | 3.16 | 3.16 | 3.16 | 3.16 | 3.16 |
| (j) | | | 3.03 | | | | | | | | |
| (k) | | | | 3.16 | | | | | | | |
| (l) | | | | | | | | | | | |
| (m) | | | | | 0.5 | | | | | | |
| (n) | | | | | | 0.5 | | | | | 0.5 |
| (o) | | | | | | | 0.5 | | | | |
| (p) | | | | | | | | 0.5 | | | |
| (q) | | | | | | | | | 0.5 | | |
| (r) | | | | | | | | | | 0.5 | 0.5 |
| | 140 | 150 | 140 | 120 | 160 | 160 | 160 | 150 | 150 | 150 | 190 |
| | 63 | 64 | 61 | 57 | 65 | 65 | 66 | 62 | 60 | 61 | 68 |
| | 213 | 225 | 220 | 202 | 245 | 250 | 239 | 230 | 225 | 219 | 285 |

**Table 2 (No. 1)**

| | | | Example | |
|---|---|---|---|---|
| | | | 16 | 17 |
| Formulation Unit: parts by weight | polyvinyl chloride*1 (a) | | 100 | 100 |
| | dioctyl phthalate (b) | | 50 | 50 |
| | calcium carbonate (c) | | 30 | 30 |
| | zinc stearate (d) | | 1.10 | 1.10 |
| | calcium stearate (e) | | 0.40 | 0.40 |
| | surface treated dolomite compound | | | |
| | composition in Production (g) Example 7 | | 3.16 | |
| | composition in Production (l) Example 8 | | | 3.03 |
| | non-treated dolomite compound | | | |
| | | burned dolomite compound*2 (o) | | |
| | polyhydric alcohol | | | |
| | | pentaerythritol (p) | | |
| | | ST-210*3 (q) | | |
| | | ST-220*4 (r) | | |
| | | composition in Production Example 4 (s) | | |
| | β-diketone compound | | | |
| | | dibenzoylmethane (t) | | |
| | | stearoylbenzoylmethane (u) | | |
| Heat coloration test (unit:min.) | | | 120 | 120 |
| Heat stability dynamic test (unit:min.) | | | 58 | 57 |
| Congo red test (unit:min.) | | | 185 | 200 |

## Claims

1. A thermal stabilizer for halogen-containing resins containing a surface-treated dolomite-series compound and the zinc salt of an organic acid, **characterised in that**:
the dolomite-series compound is surface treated with at least one compound selected from inorganic zinc compounds, zinc salts of organic acids, and stearic acid.

2. A thermal stabilizer for halogen-containing resins according to claim 1, the thermal stabilizer further characteristically containing polyhydric alcohol compounds and/or β-diketone compounds.

3. A thermal stabilizer for halogen-containing resins according to claims 1 or claim 2, wherein the dolomite-series compound is dolomite from natural origins and/or a synthetic dolomite comprising a complex salt of calcium carbonate and magnesium carbonate.

4. A thermal stabilizer for halogen-containing resins according to any one of claims 1 to 3, wherein the weight ratio of the magnesium and calcium in the dolomite-series compound is 5 : 95 to 95 : 5 on the bases of MgO and CaO.

5. A thermal stabilizer for halogen-containing resins according to any one of claims 1 to 3, wherein the dolomite-series compound contains a lightly burned dolomite produced by lightly burning a complex salt compound at the weight ratio of Mg and Ca being 5 : 95 to 95 : 5 on the bases of MgO and CaO.

6. A halogen-containing resin composition containing a thermal stabilizer for halogen-containing resins according to any one of claims 1 to 5.

7. A halogen-containing resin composition according to claim 6, wherein the thermal stabilizer for halogen-containing resins according to claims 1 to 6 is blended at 0.01 to 150 parts by weight with 100 parts by weight of a halogen-containing resin.

8. A halogen-containing resin-molded article produced by molding a halogen-containing resin composition according to claim 6 or 7.

9. A dolomite-series compound surface treated with at least one compound selected from inorganic zinc compounds, zinc salts of organic acids, and stearic acid.

10. Use of a dolomite-series compound according to claim 9, for thermally stabilizing a halogen-containing resin.

11. A method for producing a thermally stabilized halogen-containing resin comprising blending a halogen-containing resin with a thermal stabiliser of any one of claims 1 to 5.

## Patentansprüche

1. Wärmestabilisator für halogenhaltige Harze, der eine oberflächenbehandelte Verbindung der Dolomitreihe und das Zinksalz einer organischen Säure enthält, **dadurch gekennzeichnet, dass** die Verbindung der Dolomitreihe mit mindestens einer Verbindung oberflächenbehandelt ist, die unter anorganischen Zinkverbindungen, Zinksalzen von organischen Säuren und Stearinsäure ausgewählt ist.

2. Wärmestabilisator für halogenhaltige Harze nach Anspruch 1, wobei der Wärmestabilisator weiter **dadurch gekennzeichnet ist, daß** er mehrwertige Alkoholverbindungen und/oder β-Diketonverbindungen enthält.

3. Wärmestabilisator für halogenhaltige Harze nach Anspruch 1 oder Anspruch 2, wobei die Verbindung der Dolomitreihe Dolomit natürlichen Ursprungs und/oder ein synthetischer Dolomit ist, der ein Komplexsalz von Calciumcarbonat und Magnesiumcarbonat enthält.

4. Wärmestabilisator für halogenhaltige Harze nach einem der Ansprüche 1 bis 3, wobei das Gewichtsverhältnis von Magnesium und Calcium in der Verbindung der Dolomitreihe 5:95 bis 95:5 auf Basis von MgO und CaO beträgt.

5. Wärmestabilisator für halogenhaltige Harze nach einem der Ansprüche 1 bis 3, wobei die Verbindung der Dolomitreihe einen leicht gebrannten Dolomit enthält, der durch leichtes Brennen eines Komplexsalzes mit einem Gewichtsverhältnis von Mg und Ca von 5:95 bis 95:5, auf Basis von MgO und CaO, gebildet wird.

6. Halogenhaltige Harzzusammensetzung, die einen Wärmestabilisator für halogenhaltige Harze nach einem der Ansprüche 1 bis 5 enthält.

7. Halogenhaltige Harzzusammensetzung nach Anspruch 6, wobei der Wärmestabilisator für halogenhaltige Harze nach Ansprüchen 1 bis 6 in einer Menge von 0,01 bis 150 Gew.-Teilen mit 100 Gew.-Teilen eines halogenhaltigen Harzes vermischt ist.

8. Formkörper aus einem halogenhaltigen Harz, hergestellt durch Formen einer halogenhaltigen Harzzusammensetzung nach Anspruch 6 oder 7.

9. Verbindung der Dolomitreihe, die mit mindestens einer Verbindung oberflächenbehandelt ist, die unter anorganischen Zinkverbindungen, Zinksalzen von organischen Säuren und Stearinsäure ausgewählt ist.

10. Verwendung einer Verbindung der Dolomitreihe nach Anspruch 9 zum Wärmestabilisieren eines halogenhaltigen Harzes.

11. Verfahren zur Herstellung eines wärmestabilisierten halogenhaltigen Harzes, welches das Vermischen eines halogenhaltigen Harzes mit einem Wärmestabilisator gemäß-einem der Ansprüche 1 bis 5 umfaßt.

## Revendications

1. Stabilisateur thermique pour résines halogénées contenant un composé de la gamme de la dolomie traité en surface et le sel de zinc d'un acide organique, **caractérisé en ce que** le composé de la gamme de la dolomie est traité en surface avec au moins un composé choisi parmi les composés inorganiques de zinc, les sels de zinc d'acides organiques, et l'acide stéarique.

2. Stabilisateur thermique pour résines halogénées selon la revendication 1, dans lequel le stabilisateur thermique contient en outre de manière caractéristique des composés alcools polyhydriques et/ou des composés β-dicétones.

3. Stabilisateur thermique pour résines halogénées selon la revendication 1 ou la revendication 2, dans lequel le composé de la gamme de la dolomie est la dolomie provenant d'origines naturelles et/ou une dolomie synthétique comprenant un sel complexe de carbonate de calcium et de carbonate de magnésium.

4. Stabilisateur thermique pour résines halogénées selon l'une quelconque des revendications 1 à 3, dans lequel le rapport en poids du magnésium et du calcium dans le composé de la gamme de la dolomie est de 5 : 95 à 95 : 5 sur la base des MgO et CaO.

5. Stabilisateur thermique pour résines halogénées selon l'une quelconque des revendications 1 à 3, dans lequel le composé de la gamme de la dolomie contient une dolomie légèrement brûlée produite en brûlant légèrement un composé sel complexe au rapport en poids de Mg et de Ca de 5 : 95 à 95 : 5 sur la base des MgO et CaO.

6. composition de résine halogénée contenant un stabilisateur thermique pour résines halogénées selon l'une quelconque des revendications 1 à 5.

7. Composition de résine halogénée selon la revendication 6, dans laquelle le stabilisateur thermique pour résines halogénées selon les revendications 1 à 6 est mélangé à 0,01 à 150 parties en poids avec 100 parties en poids d'une résine halogénée.

8. Article moulé en résine halogénée produit en moulant une composition de résine halogénée selon la revendication 6 ou 7.

9. Composé de la gamme de la dolomie traité en surface avec au moins un composé choisi parmi les composés inorganiques de zinc, les sels de zinc d'acides organiques et l'acide stéarique.

10. Utilisation d'un composé de la gamme de la dolomie selon la revendication 9, destinée à stabiliser thermiquement une résine halogénée.

11. Procédé de production d'une résine halogénée thermiquement stabilisée comprenant le mélange d'une résine halogénée avec un stabilisateur thermique selon l'une quelconque des revendications 1 à 5.
